# EUROPEAN PATENT APPLICATION

(11) **EP 0 884 413 A1**
(43) Date of publication of application: **16.12.1998**
(21) Application number: 98304663.2
(22) Date of filing: 12.06.1998
(51) Int. Cl.: D04H 1/46, B32B 5/02

(54) **A non-woven fabric**

(30) Priority: 13.06.1997 GB 9712255; 01.04.1998 GB 9807003
(71) Applicant: Bonded Fibre Fabric Limited, Bridgwater, Somerset TA6 4NZ (GB)
(72) Inventor: Kelly, Andrew Arthur James, Wiveliscombe, Somerset TA4 2PA (GB); Slater, Simon George, Tiverton, Devon EX16 4QJ (GB); Robbins, George, Bridgewater, Somerset TA6 3TB (GB); Abercrombie, Archibald John, Bridgewater, Somerset TA7 0BP (GB); Russell, Stephen, Harrogate, North Yorkshire HG2 8DH (GB); Lawrence, Carl A., Hebden Bridge, West Yorkshire HX7 8TE (GB); Dehghani, Abbas A., Shadwell, Leeds LS17 8XNhire HX7 8TE (GB); Hampshaw, Eric, Wakefield, West Yorkshire WF3 4JY (GB); Finch, Robert, Angram, York YO2 3PA (GB); Russell, Kevin, Ilkey, West Yorkshire LS21 8NS (GB)
(74) Representative: Wilson, Peter

(57) **Abstract**

The invention relates to a non-woven fabric comprising a substantial proportion of wool fibres, particularly fibres having an average fibre diameter in the range 15 to 40 microns and a length in the range 12mm to 150mm, such as wool fibres in the nature of "wool broken top" type fibres, without an additional support substrate such as a base web or net. Fabric products incorporating such a non-woven fabric are described.

## Description

The present invention relates to a non-woven fabric formed from wool fibres.

Hitherto, fabrics comprising wool or containing a substantial proportion thereof have been manufactured from a yarn formed from wool fibres or a wool/staple fibre blend by the traditional processes of weaving and knitting.

Forming a yarn comprises a considerable number of separate processes including carding, slivering, drawing, spinning, twisting and winding. Once the yarn is woven (or knitted) to form a fabric, the fabric is usually subjected to a number of further processes which include scouring, dyeing, setting and various finishing processes according to the particular intended end use. It can therefore be seen that to a form a useful wool-containing fabric many processes are involved in order to achieve a satisfactory finished fabric.

Methods for forming non-woven fabrics which negate the need to employ several of the above-mentioned processes relating to yarn formation and weaving/knitting are well-known. However, to date, such methods have only been successfully utilised to form fabrics from man-made fibres although some natural fibres have been included in some of these fabrics. In such cases, the non-woven structure often requires a continuous filament yarn or woven support substrate to provide sufficient stability for the fibrous web and to give a satisfactory performance in the selected end use.

Wool is not normally a favoured type of fibre for non-woven fabric manufacturing due to a number of technical difficulties associated with the preparation of fibres for non-woven processing.

Despite such technical difficulties, it has long been desired to utilise wool fibres in non-woven fabric manufacturing in order to make use of the intrinsic physical properties of wood and to overcome the need to go through the many processes involved in producing a yarn and weaving/knitting the yarn to produce a fabric. The advantages offered include the following.

Non-woven processes would allow new fabric structures which are lighter in weight than those that might be produced conventionally from wool of the same fibre diameter, with potential for increased functionality, at higher rates of production and lower cost. Non-woven fabric production is approximately ten times faster than weaving. Additionally the process obviates the need for a yarn production step.

Non-woven processes could also reduce the required amount of finishing of the fabric when compared to conventional woven fabrics, thus providing additional benefits.

Non-woven processes can facilitate continuous processing (rather than the conventional batch-wise processes normally used for wool) and offer additional opportunities to produce new fabric composites through entanglement of a wool web directly on to other woven, knitted or non-woven structures manufactured from a wide range of fibres which include wool, cotton, polyester, viscose or acrylic.

Therefore an object of the invention is to seek to achieve means for realising the use of wool in a viable commercial process for producing a non-woven fabric. A further object of the invention is to provide a wool-containing non-woven fabric. A still further object of the invention is to provide a process for successfully incorporating wool into a non-woven fabric.

According to a first aspect of the present invention, resulting from the inventors' research it has been found that, contrary to common belief, it is possible to produce non-woven fabrics comprising all or a substantial proportion of wool fibres without an additional support substrate such as a base web or net, for example, by means of an entanglement process, provided that the characteristics of the wool fibres are carefully specified.

The wool fibres used preferably have an average fibre diameter in the range 15-40 microns, more preferably a mean diameter in the range 17-30 microns. A desirable fibre length is in the range of from 12mm to about 150mm. Preferably, the wool fibres have a length in the range of 30mm to 60mm.

In particular, said first aspect of the present invention is realisable by selecting wool fibres in the nature of so-called wool broken top type fibres, and providing that the selected wool fibres are cleaned and prepared for incorporation in a non-woven fabric forming process to an extent sufficient to enable efficient web formation to take place.

Since the inventors have established that the most favoured raw material appropriate for the proposed non-woven product is wool broken top, the following characteristics are identified as being typical of wool fibres of this type. Commercially, broken top is produced mainly from short wools of 35-75mm length, tender or weaker wools, and lambs wool (generally defined as wool from a sheep of less than 8 months old).

Broken top is produced by first scouring the wool to remove extraneous chemical substances (sweat, grease and brand markings). The wool is then dried, carded and gilled (a wool drawing process in which a sliver is formed). Some broken top is then rough combed to remove a greater proportion of vegetable matter (VM) and neps present. The sliver formed is then deliberately broken into short lengths and is traditionally used in the fine woollen yarn manufacturing industry, particularly for hosiery yarns. Broken top is characterised by a high degree of fibre openness and is free or nearly free of vegetable matter contamination.

Australia is the world's largest producer of fine wools and Australian wool accounts for over 50% of the world's supply of merino quality wool (typical fibre diameter ranges from 18-25 microns). Other regions such as South Africa and South America also produce fine quality wools, but the quantities available are significantly less and supply is less consistent. Additionally, the quality consistency and fibre characterisation procedures tend to be less stringent than in Australia where, over the last ten years, significant effort has been made to improve the quality of merino wools by reducing contamination and accurately quantifying important fibre properties.

Quality control of raw materials is of prime importance in Australia; the wools are well-specified and are available in large quantities. In contrast to other wool producing countries, the supply of such wools is also consistent. These features of Australian wool have permitted the realisation of the invention and overturned the previously held view that wool is not a suitable candidate for non-woven fabric manufacture.

However, having identified the characteristics that enable the success of the invention, it should not be assumed that the present situation of fine wool production in Australia could not be repeated in other territories. Thus, it is perfectly possible that with appropriate quality control measures, other wools could be used for the purposes of this invention in the future. Where wools from any other source are appropriately screened and properly treated to obtain equivalent characteristics of Australian broken top these too should be capable of adoption in the way taught herein.

Thus, according to the invention, there is provided a non-woven fabric characterised by the use of wool broken top type fibres in the fabric.

Further in accordance with this invention there is provided a non-woven fabric comprising a fibrous web consisting of entangled wool fibres, or a blend of wool and other fibres, wherein the said wool fibres have a diameter in the range of 15 microns to 40 microns, more preferably in the range 17 to 30 microns; and the said wool fibres have a mean fibre length in the range 12mm to 150mm, preferably in the range 30mm to 60mm.

According to a further aspect of the present invention, there is provided a method of forming a non-woven fabric comprising selecting a fibre mixture comprising wool fibres or at least a substantial proportion of wool fibres, forming a fibrous web therefrom without an additional support substrate and subjecting said fibrous web to an entanglement process to produce a fabric. Preferably the wool fibres have a diameter in the range of 15 microns to 40 microns, more preferably 17 to 30 microns; and said fibres have a length in the range of 12mm to 150mm, more preferably 30mm to 60mm.

In particular, this aspect of the present invention is realisable by selecting wool fibres in the nature of wool broken top type fibres as above described.

The selected wool fibres are incorporated into a fabric by use of an entanglement process. Various entanglement processes are known in the art of non-woven fabric production and typical processes employ jets of fluid under pressure to intermingle the fibres. Such a fibre entanglement process subjects loose fibres or filaments to a stream or streams of jetted fluid, for example, using air streams (US-A-4 100 324) or using hydraulic fluids (US-A-3 485 706), especially water jets, to intimately entangle the fibres. A hydroentanglement process is preferred for the performance of the invention.

Preferably, the fibrous web is one formed by a carding process, such as that described in GB-A-2 151 667.

It is preferred that the wool fibres are substantially free from any contamination such as, for example, vegetable matter, dirt and residual grease.

Preferably also the wool is prepared in a manner such that minimum entanglement is achieved before carding and web formation.

According to one aspect of the invention the raw material comprises 100% by weight of wool fibres. Alternatively, according to a further aspect of the invention, the raw material comprises a blend of wool and other fibres, wherein said other fibres include fibres formed of polyester, rayon, polyamide, polypropylene, acrylic, cotton or any other combination thereof or any other suitable staple fibre.

Preferably in accordance with that further aspect of the invention, the amount by weight of wool fibres is in the range of from 30 to 100% more preferably 50 to 100%, the balance being other fibres.

Usually said other fibres lie in the range of from 0.8 dtex to 6 dtex with a preferred range of from 1 dtex to 3.3 dtex.

Said other fibres may have a mean fibre length in the range 12mm to 75mm with a preferred mean fibre length within the range of from 30 to 60mm.

Therefore, considering the various aspects of the invention described herein it is apparent that the invention achieves what has hitherto evaded those skilled in the art, in that it is now possible to manufacture hydroentangled fabrics of wool or wool blends without the need to employ a support substrate such as a woven or knitted web or net, provided close attention is paid to the physical characteristics and condition of the wool fibres. Outside the parameters, defined herein, the technical problems associated with earlier attempts to use wool fibres in non-woven fabric manufacturing will re-occur.

The applicant has achieved wool (or wool blend) hydroentangled fabric of the present invention within the range 50g/m² to 350g/m² with a preferred range between 60g/m² and 200g/m².

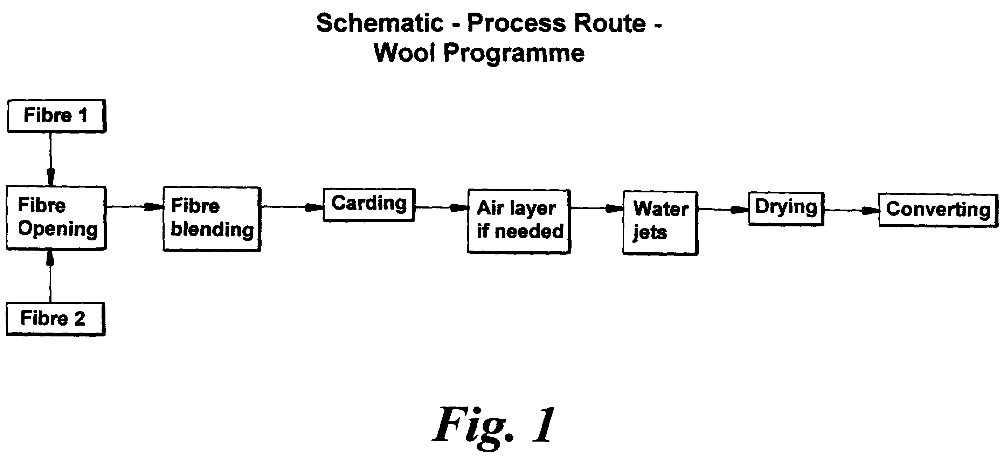

A suitable process for the formation of fabrics in accordance with the invention is now described by way of example with reference to Figure 1.

A quantity of wool "broken top" fibre 1 and a quantity of a suitable other fibre 2 in appropriate proportions, are first subjected to a cleaning and fibre opening process and then blended together at a fibre blending stage. Ideally these preliminary processes are such that minimum entanglement is achieved at this stage.

The fibrous web is then produced using a carding process, such as the carding process disclosed in GB-A-2151667 (although another suitable process could be employed).

The fibres are then preferably subjected to a randomising process (a technique for lifting fibres from a doffer), such as the use of an air layer lift. The process is especially useful for heavier fibres imparting strength to the fibres in the transverse direction.

The fibrous web so formed is then subjected to an entanglement treatment, for example, by means of a fluid entanglement process such as hydroentanglement of a type already known in the conventional manufacture of non-woven fabric based on fibres other than wool. This causes the wool (or wool blend) to become intimately entangled to form the basic non-woven fabric. Hydroentanglement, essentially involves the application of water jets directly onto fibres to bring about entanglement, or enmeshing of fibres. Other fluids, such as oils, may similarly be used to achieve the same result.

The resulting entangled fibre web produced by the entanglement treatment is then subjected to a drying process and a conversion process, that is, subsequent processing of the resultant fabric to a form appropriate to the end use. The converting process may consist of one or more of the following: slitting, dying, printing, coating, heat-treating, and lamination.

The resulting fabric after appropriate minimal finishing processes is ready for use as a substitute for conventional woven fabric or to provide a wool or wool blend fabric for new applications (as an interlining for example).

The resulting non-woven fabric may be subjected to further finishing processes to give the desired physical attributes, such as heat treatments, to impart dimensional stability and piling resistance.

The fabric can be scoured to encourage barb formation on the wool fibres which not only gives greater dimensional stability, but greater integrity to the finished fabric.

The preference for a hydro-entangling process allows manufacture of wool (or wool blend) fabrics which provide the characteristics of conventional woven fabrics with respect to softness, warmth, breathability, comfort, drape and aesthetics at a significantly lower cost and at a considerably lighter weight for a given fibre diameter.

Depending on the intended application of the fabrics described, herein, they may be subjected to dying and/or printing.

The fabrics of the present invention have a diverse range of applications, such as in the manufacture of garments, linings, furnishing coverings and other coverings. In addition, the fabrics can be laminated to form composite structures. Such structures are generally attached to substrates which include breathable films, scrims, backing fabrics, for example, PET and fleece liners. These composites can be used in the manufacture of garments, linings, furnishing coverings and other coverings. Further, the composites can be used as interlinings and inner and outer fabrics. Here, the advantages of wool can be derived relatively inexpensively. Examples of applications are given below.

### Example 1

A non-woven fabric is produced by blending cleaned and prepared 70% by weight broken-top wool with the balance acrylic. The resulting product is carded and subjected to a jet of water to engender the entanglement of fibres. The resultant fabric is then dried and used to manufacture garments, linings, furnishing and other coverings.

### Example 2

A non-woven fabric is produced by blending cleaned and prepared 50% by weight broken-top wool with the balance polyester. The resulting product is carded and subjected to a jet of water to engender the entanglement of fibres. The resultant fabric is then dried and used to manufacture garments, linings, furnishing other coverings.

### Example 3

A non-woven fabric is produced by subjecting cleaned and prepared broken-top wool to a carding process and then to a jet of water to engender the entanglement of fibres. The wool is selected to produce a hydroentangled fabric having a weight of 100 g/m². The resultant non-woven fabric is dried and scoured to encourage barbed formation on the wool fibres to give improved dimensional stability and more integrity to the finished fabric. The resultant fabric is then laminated to a breathable film, to produce a lightweight breathable clothing material.

### Example 4

The non-woven fabric produced in accordance with example 1 is laminated with a backing fabric of PET. The resultant fabric may then be used to manufacture garments, furnishing and other coverings with the advantages of wool and wool blends at a cost-effective price.

### Example 5

A 200g/m² non-woven wool fabric produced by hydroentanglement in like manner to example 3 is dyed and coated with a suitable coating such as a weatherproofing and heat-treated to give dimensional stability and pil resistance. The resultant fabric can then be used to manufacture the outer cloth of a garment cost-effectively.

### Example 6

The 100g/m² non-woven wool fabric produced by hydroentanglement in accordance with example 3 is dyed and coated and heat-treated to give dimensional stability and pil resistance. The resultant fabric can then be used in laminated form in the manufacture of shoes and garments wherein the build-up of sweat and odour is reduced due to the breathable nature and moisture retentive properties of the fabric.

### Example 7

A 100g/m² non-woven wool fabric produced by hydroentanglement in accordance with example 3 is dyed and is then coated with a flame retardant coating and heat-treated to give dimensional stability and pil resistance. The resultant fabric can then be used in the manufacture of flame retardant textiles for use in clothing, furnishing and other coverings.

## Claims

1. A non-woven fabric comprising a substantial proportion of wool fibres without an additional support substrate such as a base web or net.

2. A non-woven fabric comprising a substantial proportion of wool fibres in the nature of "wool broken top" type fibres cleaned and prepared for incorporation in a non-woven fabric forming process to an extent sufficient to enable efficient web formation to take place.

3. A non-woven fabric according to claim 1 or claim 2 wherein the wool fibres have an average fibre diameter in the range 15 microns to 40 microns.

4. A non-woven fabric according to claim 3 wherein the wool fibres have a mean fibre diameter in the range of 17 microns to 30 microns.

5. A non-woven fabric according to any preceding claim wherein the wool fibres have a mean fibre length in the range of from about 12mm to about 150mm.

6. A non-woven fabric according to claim 5 wherein the wool fibres have a mean fibre length in the range 30mm to 60mm.

7. A non-woven fabric according to any preceding claim wherein the wool fibres are substantially free from contamination, such as vegetable matter, dirt and residual grease.

8. A non-woven fabric according to any preceding claim wherein the wool fibres are prepared in a manner such that minimum entanglement is achieved before subsequent non-woven fabric-forming steps such as carding and web information.

9. A non-woven fabric according to any preceding claim wherein the wool fibres provide 100% by weight of the raw material for the fabric.

10. A non-woven fabric according to any one of claims 1 to 8 wherein the component fibres thereof comprise a blend of wool and other fibres including fibres formed of polyester, rayon, polyamide, polypropylene, acrylic, cotton or any other combination thereof or any other suitable staple fibre.

11. A non-woven fabric according to claim 10 wherein the amount by weight of wool fibres is in the range of from 30 to 100%, the balance being said other fibres.

12. A non-woven fabric according to claim 10 or claim 11 wherein the said other fibres lie in the range of 0.8 dtex to 6 dtex.

13. A non-woven fabric according to claim 10 or claim 11 wherein the other fibres lie in the range 1 dtex and 3.3 dtex.

14. A non-woven fabric according to claim 10 or claim 11 wherein the said other fibres have a mean fibre length in the range 12mm to 75mm.

15. A non-woven fabric according to claim 10 or claim 11 wherein the said other fibres have a mean fibre length within the range of from 30mm to 60mm.

16. A non-woven fabric comprising a fibrous web consisting of entangled wool fibres, or of a blend of wool and other fibres, wherein the said wool fibres have a diameter in the range of 15 microns to 40 microns and the said wool fibres have a mean fibre length in the range of 12mm to 150mm.

17. A non-woven fabric formed from a carded fibrous web of wool fibres or a blend of wool fibres and other suitable fibres, and consisting entirely of entangled fibres without any secondary woven, knitted support fabric or yarns.

18. A laminated non-woven fabric product formed from at least one layer of non-woven fabric according to any preceding claim laminated with at least one layer of other material.

19. A laminated product according to claim 18 wherein the with at least one layer of other material is selected from breathable films, scrims, backing fabrics and fleece liners

20. A method of forming a non-woven fabric comprising selecting a fibre mixture comprising at least a substantial proportion of wool fibres, forming a fibrous web therefrom without an additional support substrate and subjecting said fibrous web to an entanglement process to produce a fabric.

21. A method according to claim 20 wherein the wool fibres have a diameter in the range of 15 microns to 40 microns

22. A method according to claim 20 or claim 21 wherein the wool fibres have a length in the range of 12mm to 150mm, more preferably 30mm to 60mm.

23. A method according to claim 20 wherein wool fibres are in the nature of "wool broken top" type fibres.

24. A method according to any one of claims 20 to 23 wherein the fibrous web is formed by a carding process.

25. A method according to any one of claims 20 to 24 wherein the selected wool fibres are incorporated into a fibrous web fabric by use of a fluid entanglement process.

26. A method according to claim 25 wherein entanglement process is a hydroentanglement process.

27. A method according to any one of claims 20 to 26 wherein the wool fibres are first prepared in a manner such that minimum entanglement is achieved before web and fabric formation.

28. A method according to any one of claims 20 to 27 wherein the raw material comprises 100% by weight of wool fibres.

29. A method according to any one of claims 20 to 27 wherein the raw material comprises a blend of wool and other fibres, wherein said other fibres include fibres formed of polyester, rayon, polyamide, polypropylene, acrylic, cotton or any other combination thereof or any other suitable staple fibre.

30. A method according to claim 29 wherein the amount by weight of wool fibres is in the range of from 50 to 100%, the balance being other fibres.

31. A method according to claim 29 or claim 30 wherein said other fibres lie in the range of from 1 dtex to 3.3 dtex.

32. A method according to any one of claims 20 to 31 wherein the component wool or other fibres are subjected to a randomising process between the web formation and entanglement steps.
